# EUROPÄISCHE PATENTSCHRIFT

(11) **EP 1 320 835 B1**
(45) Veröffentlichungstag und Bekanntmachung des Hinweises auf die Patenterteilung: **14.11.2007**
(21) Anmeldenummer: 01976163.4
(22) Anmeldetag: 29.08.2001
(51) Int. Cl.: G07C 5/08

(54) **VORRICHTUNG UND VERFAHREN ZUR ERFASSUNG VON FAHRDATEN EINES KRAFTFAHRZEUGES MIT EINEM ELEKTRONISCH ANSTEUERBAREN ANTRIEBSSTRANG**
DEVICE AND METHOD FOR DETECTING DRIVING DATA OF A MOTOR VEHICLE COMPRISING AN ELECTRONICALLY CONTROLLABLE DRIVE TRAIN
PROCEDE ET DISPOSITIF POUR DETECTER DES DONNEES DE MARCHE D'UNE AUTOMOBILE AVEC UNE CHAINE CINEMATIQUE A COMMANDE ELECTRONIQUE

(30) Priorität: 20.09.2000 DE 10046832
(43) Veröffentlichungstag der Anmeldung: 25.06.2003
(73) Patentinhaber: DaimlerChrysler AG, 70327 Stuttgart (DE)
(72) Erfinder: BAUER, Wolf-Dietrich, 70178 Stuttgart (DE); MAYER, Christian-Michael, 70619 Sillenbuch (DE); SCHWARZHAUPT, Andreas, 74420 Oberrot (DE); SPIEGELBERG, Gernot, 71296 Heimsheim (DE)
(86) Internationale Anmeldenummer: PCT/EP2001/009946
(87) Internationale Veröffentlichungsnummer: WO 2002/025598

(56) Entgegenhaltungen:
- EP-A- 0 871 147
- WO-A-95/05649
- DE-A- 19 546 815

## Beschreibung

Die Erfindung betrifft eine Vorrichtung zur Erfassung von Fahrdaten eines Kraftfahrzeuges mit einem elektronisch ansteuerbaren Antriebsstrang. Weiterhin betrifft die Erfindung ein Verfahren zur Erfassung von Fahrdaten eines Kraftfahrzeuges mit einem elektronisch ansteuerbaren Antriebsstrang.

Aus der DE 42 20 963 A1 ist ein Fahrzeugnavigationssystem bekannt, welches zum Abschätzen bzw. Bestimmen des Ortes des Fahrzeuges, zum Erfassen des Auftretens eines Unfalls und zum Speichern von Informationen für die Verwendung bei der Analyse des Unfalls dient.

Ein Unfalldatenschreiber ist in der DE 195 09 711 A1 offenbart. Es sollen Daten, die ein Unfallgeschehen charakterisieren, in einem als Ringspeicher ausgebildeten Datenspeicher gespeichert werden. Hierbei ist die zumindest zeitweise Speicherung der von dem Kraftfahrzeug während der ausgeführten Fahraktionen tatsächlich gelieferten Beschleunigungs-, Geschwindigkeits-, Zeit-, Positions- und Richtungs-Ist-Daten vorgesehen.

Die DE 19546815 A1 betrifft die Speicherung von Daten, die beim Betreiben eines Steuersystems eines Kraftfahrzeuges von Steuereinheiten über eine Datenübertragungsleitung ausgetauscht werden. Es wird vorgeschlagen, zumindest ein Teil der erfassten und/ oder der über die Datenübertragungsleitung übermittelten Daten für eine spätere Auswertung abzuspeichern.

Diese bekannten Vorrichtungen zur Erfassung von Fahrdaten eines Kraftfahrzeuges bieten zwar die Möglichkeit, aufzuzeichnen, welche tatsächlichen Fahraktionen das Fahrzeug zu welchem Zeitpunkt, an welchem Ort und in welche Fahrtrichtung ausgeführt hat. Dies ermöglicht jedoch beispielsweise im Falle eines Unfalls nur eine unzureichende Analyse des Unfallherganges, da ein Vorliegen eines Bedienfehlers durch den Fahrer oder ein Fehler im Fahrzeugsystem nicht ohne weiteres anhand der gespeicherten Daten herzuleiten ist.

Die Aufgabe der Erfindung besteht darin, eine Vorrichtung und ein Verfahren zur Erfassung von Fahrdaten eines Kraftfahrzeuges anzugeben, welche zu einer Erhöhung der Fahrzeug- und Verkehrssicherheit beiträgt. Darüber hinaus soll die erfindungsgemäße Vorrichtung bzw. das erfindungsgemäße Verfahren eine verbesserte Unfallanalyse ermöglichen.

Diese Aufgabe wird gemäß der Erfindung vorrichtungsstechnisch durch die Merkmale des Patentanspruchs 1 und verfahrenstechnisch durch die Merkmale des Patentanspruchs 9 gelöst. Die Unteransprüche betreffen vorteilhafte Weiterbildungen.

Demgemäß ist die Speichereinrichtung mit Bedienelementen zur fahrerseitigen Erzeugung von Betätigungssignalen zur Beeinflussung des Antriebsstranges und mit einer Ansteuereinrichtung zur betätigungssignalabhängigen Erzeugung von Ansteuersignalen für den Antriebsstrang gekoppelt. Die Speichereinrichtung ist hierbei für die zumindest zeitweise Speicherung der Betätigungssignale und der Ansteuersignale ausgebildet.

Dies erlaubt beispielsweise im Falle eines Unfalls auf besonders einfache Weise zu rekonstruieren, ob nun ein fahrerseitiger Bedienfehler oder aber ein Fehler in der elektronischen Ansteuerung des Antriebsstranges zum Unfall geführt hat, da die Daten quasi in drei Ebenen unterteilt erfaßt werden. In der ersten Ebene werden die Daten auf dem Signalweg vom Fahrer über die Bedienelemete bis zur Ansteuereinrichtung erfaßt. In der zweiten Ebene werden die Daten auf dem Signalweg von der Ansteuereinrichtung bis zur Antriebsstrang erfaßt. In der dritten Ebene werden die tatsächlichen ausgeführten Ist-Fahrdaten des Kraftfahrzeugens erfaßt.

Um eine fahrerunabhängige bzw. den Fahrer unterstützende Eingriffsmöglichkeit in die Fahrzeugführung aufzuzeichnen, ist die Speichereinrichtung mit einer sensorbasierten Assistenzeinrichtung zur Erzeugung von Eingriffsignalen zur elektronischen Beeinflussung der Ansteuereinrichtung des Antriebsstranges verbunden und für die zumindest zeitweise Speicherung der Eingriffsignale ausgebildet. Es lassen sich somit im Falle eines Unfalls Rückschlüsse auf fehlerhafte Eingriffe durch die Assistenzeinrichtung ziehen.

Die Assistenzeinrichtung kann mit einer Navigationseinrichtung zusammenwirken. Durch diese Maßnahme sind die Eingriffsignale durch Positions- und/oder Richtungsvorgaben der Navigationseinrichtung bestimmbar. Autonome oder teilautonome Eingriffe lassen sich hierdurch gut rekonstruieren.

Gemäß einem weiterführenden Gedanken der Erfindung ist eine mit einer fahrzeugexternen Empfangseinrichtung in Kontakt stehende fahrzeuginterne Sendeeinrichtung zur Übermittlung der Ist-Fahrzeugdaten, der Positionsdaten, der Betätigungssignale, der Ansteuersignale und/oder der Eingriffsignale vorgesehen. An der fahrzeugexternen Empfangseinrichtung kann eine weitere Datenverarbeitung erfolgen. Diese ermöglicht auch eine vom Fahrzeug entfernte Auswertung und Sammlung der Fahrdaten.

Die von den Bedienelementen erzeugten Betätigungssignale umfassen zumindest vom Fahrer eingegebene Geschwindigkeitssignale und Positions- und Fahrtrichtungssignale. Die von der Assistenzeinrichtung erzeugten Eingriffsignale umfassen zumindest von der Assistenzeinrichtung vorgegebene Geschwindigkeitssignale und Positions- und Fahrtrichtungssignale. Die Ansteuersignale umfassen zumindest von der Steuereinrichtung erzeugte Soll-Geschwindigkeitssignale und Soll-Positions- und Fahrtrichtungssignale. Die von der Sensoreinrichtung ermittelten Ist-Fahrzeugdaten umfassen zumindest Ist-Geschwindigkeitssignale und Ist-Positions- und Fahrtrichtungssignale. Aus diesen Bewegungsdaten ist es leicht möglich über Position, Geschwindigkeit und Richtung des Kraftfahrzeuges einen Unfallhergang exakt zu beschreiben.

Gemäß einem weiteren Grundgedanken ist ein Verfahren zur Erfassung von Fahrdaten eines Kraftfahrzeuges mit einem elektronisch ansteuerbaren Antriebsstrang vorgesehen. Demgemäß gibt der Fahrer des Kraftfahrzeuges seinen Fahrerwunsch durch entsprechende Bedieneingaben vor, wodurch entsprechende Betätigungssignale erzeugt werden. Die Betätigungssignale werden in Abhängigkeit vom Fahrerwunsch in Ansteuersignale für den Antriebsstrang umgesetzt. Die Fahrdynamik betreffende Ist-Fahrzeugdaten und die Fahrzeugposition repräsentierende Positionsdaten werden ermittelt. Die Betätigungssignale, die Ansteuersignale, die Ist-Fahrzeugdaten und/oder die Positionsdaten werden zumindest zeitweise gespeichert.

Das erfindungsgemäße Verfahren erlaubt beispielsweise im Falle eines Unfalls auf besonders einfache Weise zu rekonstruieren, ob nun ein fahrerseitiger Bedienfehler oder aber ein Fehler in der elektronischen Ansteuerung des Antriebsstranges zum Unfall geführt hat.

Gemäß einer vorteilhaften Ausführungsform wird die Umgebung des Kraftfahrzeuges hinsichtlich der Fahrsituation insbesondere im Verkehrsgeschehen abgetastet, wodurch fahrsituationsbedingte Fahraktionen auslösende Eingriffsignale erzeugt werden, welche in entsprechende Ansteuersignale für den Antriebsstrang umgesetzt werden. Die fahrsituationsabhängigen Eingriffsignale werden zumindest zeitweise gespeichert.

Für eine vom Fahrzeug entfernte Auswertung werden die fahrerseitigen Betätigungssignale, die fahrsituationsabhängigen Eingriffsignale, die Ansteuersignale für den Antriebsstrang, die Ist-Fahrzeugdaten und/oder die Positionsdaten an eine fahrzeugexterne Funktionseinheit zur weiteren Datenverarbeitung übermittelt.

Die den Fahrerwunsch repräsentierenden Betätigungssignale können als ein erster Bewegungsvektor, die fahrsituationsabhängigen Eingriffsignale können als ein zweiter Bewegungsvektor, die Ansteuersignale können als ein Soll-Bewegungsvektor und die Ist-Fahrzeugdaten können als ein Ist-Bewegungsvektor gespeichert werden. Die Darstellung der Fahrdaten in Bewegungsvektoren hat den Vorteil einer übersichtlichen und gut handhabbaren Darstellung.

Im Falle eines Unfalls können die gespeicherten Daten auch in Bewegungsvektor-Darstellung ausgelesen werden. Zur weiteren externen Datenverarbeitung können auch die Bewegungsvektoren an eine fahreugexterne Funktionseinheit übermittelt werden.

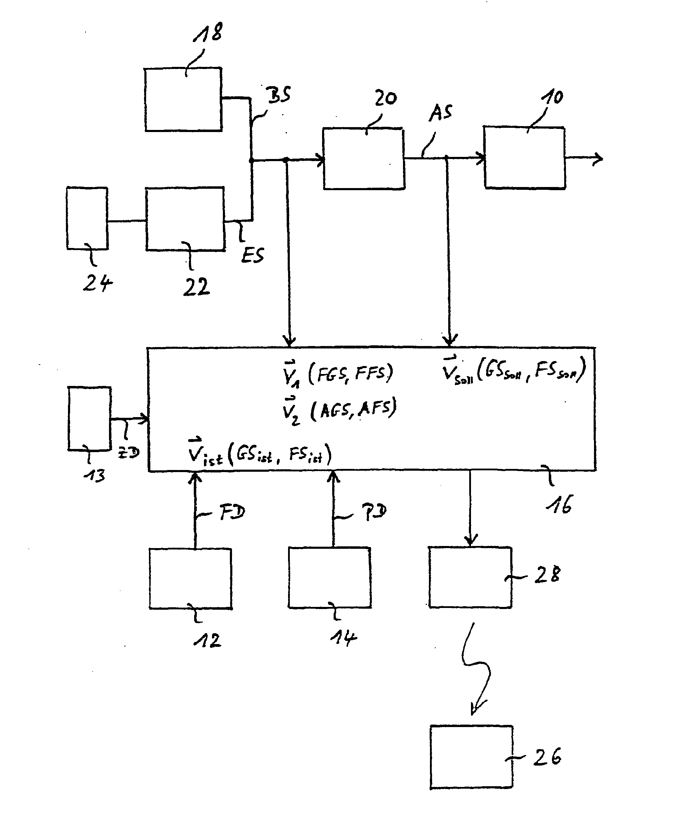

Anhand der nachstehenden Beschreibung im Zusammenhang mit der beigefügten Zeichnung werden weitere Vorteile, Merkmale und Einzelheiten der Erfindung deutlicher.

Die einzige Figur zeigt eine schematische Darstellung einer Ausführungsform der erfindungsgemäßen Vorrichtung zur Erfassung von Fahrdaten eines Kraftfahrzeuges mit einem elektronisch ansteuerbaren Antriebsstrang 10.

Das Kraftfahrzeug ist im dargestellten Ausführungsbeispiel ein Lastkraftwagen, kann jedoch auch jedes andere Kraftfahrzeug sein. Der Antriebsstrang 10 umfaßt unter anderem den Motor, das Getriebe und die Lenkung des Kraftfahrzeuges. Das Getriebe kann mechanisch oder automatisch schaltbar sein. In erweitertem Sinne umfaßt der Antriebsstrang 10 auch weitere Aggregate, die Bremsen, die Lenkung und elektronische Stabilisierungssysteme (ESP). Zudem können im Antriebsstrang 10 insbesondere auch X-by-wire-Syteme, wie etwa steer-by-wire- (el. Lenkung), brakeby-wire- (el. Bremse) oder allgemeine drive-by-wire-Systeme umfaßt sein. In jedem Fall soll im dargestellten Ausführungsbeispiel der Antriebsstrang 10 mit seinen (nicht gezeigten) Komponenten durch elektronische Signale AS angesteuert werden können.

Eine Sensoreinrichtung 12 dient zur Ermittlung von die Fahrdynamik betreffenden Ist-Fahrzeugdaten FD, welche zumindest Ist-Geschwindigkeitssignale GS_ist und Ist-Positions- und Fahrtrichtungssignale FS_ist umfassen. Die Ist-Geschwindigkeitssignale GS_ist und Ist-Positions- und Fahrtrichtungssignale FS_ist lassen sich in der Form eines gut handhabbaren Ist-Bewegungsvektors Vist(GS_ist, FS_ist) darstellen, welcher zumindest die Geschwindigkeit und die Fahrtrichtung des Kraftfahrzeuges angibt. Der Ist-Bewegungsvektors v̅ist repräsentiert die von Fahrzeug tatsächlich erzeugten Fahrdaten.

Ein Bewegungsvektor kann grundsätzlich auch weitere aktuelle Fahrzeugdaten beinhalten, wie etwa die Motordrehzahl oder Beschleunigungswerte.

Eine Zeiterfassungseinrichtung 13 erzeugt stets die aktuellen Zeitdaten ZD. Eine Positionsbestimmungseinrichtung 14 ist für die Ermittlung der aktuellen Positionsdaten PD des Kraftfahrzeuges vorgesehen. Der Ist-Bewegungsvektors v̅ist kann zusätzlich die Zeitdaten ZD als "Zeitstempel" umfassen.

Eine Speichereinrichtung 16 ist mit Bedienelementen 18 gekoppelt, die dem Fahrer zur Vorgabe seines Fahrerwunsches, d.h. zur Bedienung des Kraftfahrzeuges dienen. Die Bedienelemente 18 umfassen unter anderem das Lenkrad, das Fahrpedal, das Bremspedal, das Kupplungspedal, evtl. einen "Sidestick" (Steuerhebel) und dergleichen zur manuellen Bedienung des Kraftfahrzeuges notwendige Mensch-Maschine-Schnittstellen-Einrichtungen. Die Bedienelemente 18 erlauben auch die Bedienung des Kraftfahrzeuges über neue Bedienkonzepte.

Durch die Betätigung der Bedienelemente 18 werden mittels einer nicht gezeigten elektronischen Sensorik Betätigungssignale BS erzeugt, welche den Antriebsstrang 10 beeinflussen. So beeinflußt beispielsweise das Drehen des Lenkrades die Fahrtrichtung des Kraftfahrzeuges. Derartige den Fahrerwunsch repräsentierende, von den Bedienelementen 18 erzeugte Betätigungssignale BS umfassen zumindest vom Fahrer eingegebene Geschwindigkeitssignale FGS und Positions- und Fahrtrichtungssignale FFS und lassen sich als Bewegungsvektor v̅1(FGS, FFS) darstellen. Der Bewegungsvektor v̅1 kann jedoch auch weitere Betätigungssignale BS umfassen.

Die Speichereinrichtung 16 ist weiterhin mit einer Ansteuereinrichtung 20 gekoppelt, welche in Abhängigkeit vom fahrerseitig vorgegebenen Betätigungssignal BS Ansteuersignale AS für den Antriebsstrang 10 erzeugt. Die Ansteuereinrichtung 20 umfaßt unter anderem die Motorsteuerung, die Bremsensteuerung und eventuell die Steuereinrichtungen für X-by-wire-Systeme und weitere Steuerungen für Antriebsstrangkomponenten.

Die Ansteuersignale AS umfassen zumindest von der Ansteuereinrichtung erzeugte Soll-Geschwindigkeitssignale GS_soll und Soll-Fahrtrichtungssignale FS_soll und lassen sich als Soll-Bewegungsvektor v̅soll (GS_soll, FS_soll) darstellen.

Der von der Ansteuereinrichtung 20 vorgegebene Soll-Bewegungsvektor v̅soll (GS_soll, FS_soll) wird durch den Antriebsstrang 10 abgearbeitet und kann auch weitere, den Antriebsstrang 10 beeinflussende bzw. steuernde Soll-Fahrdaten des Kraftfahrzeuges aufweisen.

Die Ist-Fahrzeug-, Zeit- und Positionsdaten (FD, ZD, PD) werden zusammen mit den Betätigungssignalen BS und den Ansteuersignalen AS zumindest zeitweise in der Speichereinrichtung 16 gespeichert. Die Speichereinrichtung 16 ist dabei als fortlaufender Speicher ausgebildet, so daß die gespeicherten Daten für eine vorgegebene Zeitdauer erhalten bleiben. Nach Verstreichen der vorgegebenen Zeitdauer werden die ursprünglichen Daten durch die aktuellen Daten kontinuierlich überschrieben.

Im Falle eines Unfalls lassen sich die gespeicherten Daten auslesen und mittels geeigneter Auswerteeinrichtungen analysieren. Aufgrund der Analyseergebnisse kann leicht festgestellt werden, ob ein Bedienfehler der Fahrers, eine Fehler in der Signalweiterleitung, in der Kraftfahrzeugelektronik oder eine andere Ursache zum Unfall geführt hat.

In dem in der Figur gezeigten Ausführungsbeispiel ist die Speichereinrichtung 16 mit einer sensorbasierten Assistenzeinrichtung 22 verbunden. Derartige Assistenzeinrichtungen dienen dazu, den Fahrer von notwendigen Fahraktionen zu entlasten bzw. die Fahrsicherheit zu erhöhen. Im dargestellten Ausführungsbeispiel umfaßt die Assistenzeinrichtung 22 einen mit einem Abstandsradarsensor gekoppelten "Abstandsregeltempomaten", mit dessen Hilfe insbesondere bei Autobahnfahrt ein vorgegebener Abstand zum vorausfahrenden Fahrzeug aufrechterhalten werden kann. Es wird hierdurch ein Eingriff in die Längsregelung und damit in den Antriebsstrang 10 geschaffen.

Die Assistenzeinrichtung 22 kann jedoch auch weitere Assistenzsysteme umfassen, wie beispielsweise einen kamerabasierten "Spurführungsassistenten", welcher ermittelt, ob das Fahrzeug in der vorgesehenen Fahrspur fährt. Bei drohendem Verlassen der Spur wird entweder ein Warnsignal an den Fahrer abgegeben oder automatisch ein Lenkeingriff durchgeführt.

Weiterhin sind als Assistenzeinrichtung 22 Systeme vorgesehen, welche ein teilautonomes oder voll autonomes Fahren des Fahrzeuges ermöglichen. Der Antriebsstrang wird in einem derartigen System automatisch angesteuert.

Die Umgebung des Kraftfahrzeuges wird durch die Assistenzeinrichtung 22 hinsichtlich der Fahrsituation insbesondere im Verkehrsgeschehen abgetastet. Die Assistenzeinrichtung 22 erzeugt Eingriffsignale ES, welche die Ansteuereinrichtung 20 des Antriebsstranges 10 elektronisch beeinflußt, beispielsweise als Eingriff in die Längsregelung. Die Eingriffsignale ES werden zumindest zeitweise in der Speichereinrichtung 16 gespeichert.

Die von der Assistenzeinrichtung 22 erzeugten fahrsituationsabhängigen Eingriffsignale ES umfassen zumindest von der Assistenzeinrichtung 22 vorgegebene Geschwindigkeitssignale AGS und Positions- und Fahrtrichtungssignale AFS und lassen sich in ähnlicher Weise wie beispielsweise der Bewegungsvektor v̅1 als ein zweiter Bewegungsvektor v̅2 (AGS, AFS) darstellen.

Die Assistenzeinrichtung 22 wirkt in der dargestellten Ausführungsform derart mit einer Navigationseinrichtung 24 zusammen, daß die Eingriffsignale ES durch Positions- und/oder Richtungsvorgaben der Navigationseinrichtung 24 zumindest mitbestimmt sind. Es kann also durch die Navigationseinrichtung 24 ein Eingriff in die Längs- und Querregelung des Fahrzeuges zumindest beeinflußt werden.

Zusätzlich können (nicht gezeigte) Systeme vorgesehen sein, welche die Eingriffe durch die Assistenzeinrichtung 22 aber auch die Betätigungseingriffe durch den Fahrer aufgrund zusätzlich ermittelter Daten korrigieren. Diese zusätzlichen Daten werden durch geeignete Sensoren ermittelt. So ist beispielsweise ein reaktiver, korrigierender Eingriff in das elektronische Stabilitätsprogramm bei Ermittlung von Fahrbahnnässe oder - glätte möglich. Ebenso kann eine geeignete, beispielsweise kamerabasierte Umgebungssensorik Unfälle vermeiden helfen, indem entsprechende unfallvermeidende prädiktive Korrektureingriffe durchgeführt werden. So sind auch Pre-Crash-Maßnahmen, d.h. Eingiffe in die Anstriebsstrang 10 vor einem unvermeidlichen Unfall rechtzeitig durchführbar.

Um die ermittelten Fahrdaten des Kraftfahrzeuges zentral zu sammeln und auszuwerten, lassen sich diese an eine außerhalb des Kraftfahrzeuges befindliche Leitstelle übermitteln. Die Leitstelle weist eine fahrzeugexterne Empfangseinrichtung 26 auf. Eine fahrzeuginterne Sendeeinrichtung 28 übermittelt die Ist-Fahrzeugdaten FD, die Zeitdaten ZD, die Positionsdaten PD, die Betätigungssignale BS, die Ansteuersignale AS und/oder die Eingriffsignale ES an die fahrzeugexterne Empfangseinrichtung 26. Zur Identifizierung des Kraftfahrzeuges wird zusätzlich eine individuelle Fahrzeugkennung zusammen mit den Fahrdaten übermittelt.

Für eine besonders komfortable Weiterverarbeitung der erfaßten Daten werden der Bewegungsvektor v̅1 (FGS, FFS), der Bewegungsvektor v̅2 (AGS, AFS), der Soll-Bewegungsvektor v̅soll (GS_soll, FS_soll) und/oder der Ist-Bewegungsvektor v̅ist (GS_ist, FS_ist) in der Speichereinrichtung 16 gespeichert, lassen sich aber auch an die fahreugexterne Funktionseinheit 26 zur weiteren Datenverarbeitung übermitteln.

Die Fahrdaten werden erfindungsgemäß quasi in drei Ebenen unterteilt erfaßt: In der ersten Ebene werden die Daten auf dem Signalweg vom Fahrer über die Bedienelemente 18 (und/oder von der Assistenzeinrichtung 22) bis zur Ansteuereinrichtung 20 erfaßt. In der zweiten Ebene werden die Daten auf dem Signalweg von der Ansteuereinrichtung 20 bis zum Antriebsstrang 10 erfaßt. In der dritten Ebene werden die tatsächlichen ausgeführten Ist-Fahrdaten des Kraftfahrzeuges beispielsweise in der Form des Bewegungsvektors v̅ist erfaßt.

Zusammenfassend ist festzuhalten, daß mit dieser erfindungsgemäßen Vorrichtung bzw. diesem erfindungsgemäßen Verfahren eine sehr einfache und differenzierte Rekonstruktion der Geschehnisse von der Eingabeebene über die technische Korrektur bis zur Ausführungsebene ermöglicht wird.

## Patentansprüche

1. Vorrichtung zur Erfassung von Fahrdaten eines Kraftfahrzeuges mit einem elektronisch ansteuerbaren Antriebsstrang (10), umfassend
- Bedienelemente (18) zur fahrerseitigen Erzeugung von Betätigungssignalen (BS) zur Beeinflussung des Antriebsstranges (10), wobei die Betätigungssignale (BS) eine vom Fahrer des Kraftfahrzeuges vorgenommene Bedienung repräsentieren,
- eine Ansteuereinrichtung (20) zur betätigungssignalabhängigen Erzeugung von Ansteuersignalen (AS) für den Antriebsstrang (10), wobei die Ansteuersignale (AS) eine Umsetzung der Betätigungssignale (BS) durch die Ansteuereinrichtung (20) repräsentieren,
- eine Sensoreinrichtung (12) zur Ermittlung von die Fahrdynamik betreffenden Ist-Fahrzeugdaten (FD), wobei die Ist-Fahrzeugdaten (FD) eine vom Antriebsstrang (10) tatsächlich ausgeführte Fahrdynamik des Kraftfahrzeuges repräsentieren,
- eine Zeiterfassungseinrichtung (13) zur Erzeugung von Zeitdaten (ZD) und eine Positionsbestimmungseinrichtung (14) zur Ermittlung von Positionsdaten (PD) des Kraftfahrzeuges, sowie
- eine Speichereinrichtung (16) zur zumindest zeitweisen Speicherung der Betätigungssignale (BS), der Ansteuersignale (AS), der Ist-Fahrzeugdaten (FD) und der Zeit- und Positionsdaten (ZD, PD),
- womit die erfassten Fahrdaten quasi in drei Ebenen unterteilt sind, nämlich in einer ersten Ebene die Fahrdaten auf dem Signalweg vom Fahrer über die Bedienelemente (18) bis zur Ansteuereinrichtung (20), in einer zweiten Ebene von der Ansteuereinrichtung (20) bis zum Antriebsstrang (10) und in einer dritten Ebene die tatsächlich ausgeführten Ist-Fahrdaten des Kraftfahrzeuges, **dadurch gekennzeichnet, daß** die Fahrdaten für jede des drei Ebenen als ein jeweiliger Bewegungsvektor, welcher zumindest die feschwindigkeit und die Fahrtrichtung des Kraftfahrzeuges angibt, gespeichert werden.

2. Vorrichtung nach Anspruch 1,
**dadurch gekennzeichnet, daß**
die Speichereinrichtung (16) mit einer sensorbasierten Assistenzeinrichtung (22) zur Erzeugung von Eingriffsignalen (ES) zur elektronischen Beeinflussung der Ansteuereinrichtung (20) des Antriebsstranges (10) verbunden und für die zumindest zeitweise Speicherung der Eingriffsignale (ES) ausgebildet ist.

3. Vorrichtung nach Anspruch 2,
**dadurch gekennzeichnet, daß**
die Assistenzeinrichtung (22) mit einer Navigationseinrichtung (24) zusammenwirkt und die Eingriffsignale (ES) durch Positions- und/oder Richtungsvorgaben der Navigationseinrichtung (24) bestimmbar sind.

4. Vorrichtung nach einem der Ansprüche 1 bis 3,
**gekennzeichnet durch**
eine mit einer fahrzeugexternen Empfangseinrichtung (26) in Kontakt stehende fahrzeuginterne Sendeeinrichtung (28) zur Übermittlung der Ist-Fahrzeugdaten (FD), der Zeitdaten (ZD), der Positionsdaten (PD), der Betätigungssignale (BS), der Ansteuersignale (AS) und/oder der Eingriffsignale (ES).

5. Vorrichtung nach einem der Ansprüche 1 bis 4,
**dadurch gekennzeichnet, daß**
die von den Bedienelementen (18) erzeugten Betätigungssignale (BS) zumindest vom Fahrer eingegebene Geschwindigkeitssignale (FGS)und Positions- und Fahrtrichtungssignale (FFS) umfassen.

6. Vorrichtung nach einem der Ansprüche 2 bis 5,
**dadurch gekennzeichnet, daß**
die von der Assistenzeinrichtung (22) erzeugten Eingriffsignale (ES) zumindest von der Assistenzeinrichtung (22) vorgegebene Geschwindigkeitssignale (AGS) und Positions- und Fahrtrichtungssignale (AFS) umfassen.

7. Vorrichtung nach einem der Ansprüche 1 bis 6,
**dadurch gekennzeichnet, daß**
die Ansteuersignale (AS) zumindest von der Steuereinrichtung erzeugte Soll-Geschwindigkeitssignale (GS_soll) und Soll-Positions- und Fahrtrichtungssignale (FS_soll) umfassen.

8. Vorrichtung nach einem der Ansprüche 1 bis 7,
**dadurch gekennzeichnet, daß**
die von der Sensoreinrichtung (12) ermittelten Ist-Fahrzeugdaten (FD) zumindest Ist-Geschwindigkeitssignale (GS_ist) und Ist-Positions- und Fahrtrichtungssignale (FS_ist) umfassen.

9. Verfahren zur Erfassung von Fahrdaten eines Kraftfahrzeuges mit einem elektronisch ansteuerbaren Antriebsstrang, wobei der Fahrer des Kraftfahrzeuges seinen Fahrerwunsch durch entsprechende Bedieneingaben vorgibt, wodurch entsprechende Betätigungssignale (BS) erzeugt werden,
die Betätigungssignale (BS) in Abhängigkeit vom Fahrerwunsch in Ansteuersignale (AS) für den Antriebsstrang (10) umgesetzt werden,
Zeitdaten (ZD), die Fahrdynamik betreffende Ist-Fahrzeugdaten (FD) und die Fahrzeugposition repräsentierende Positionsdaten (PD) ermittelt werden, und
die Betätigungssignale (BS), die Ansteuersignale (AS), die Ist-Fahrzeugdaten (FD) die Zeitdaten (ZD), und/oder die Positionsdaten (PD) zumindest zeitweise gespeichert werden,
womit die erfassten Fahrdaten quasi in drei Ebenen unterteilt sind, nämlich in einer ersten Ebene die Fahrdaten auf dem Signalweg vom Fahrer über die Bedienelemente (18) bis zur Ansteuereinrichtung (20), in einer zweiten Ebene von der Ansteuereinrichtung (20) bis zum Antriebsstrang (10) und in einer dritten Ebene die tatsächlich ausgeführten Ist-Fahrdaten des Kraftfahrzeuges, **dadurch gekennzeichnet, daß** die Fahrdaten für jede der drei Ebenen als ein jeweiliger Bewegungsvektor, welcher zumindest die Geschwindigkeit und die Fahrtrichtung des Kraftfahrzeuges angibt, gespeichert werden.

10. Verfahren nach Anspruch 9,
**dadurch gekennzeichnet, daß**
die Umgebung des Kraftfahrzeuges hinsichtlich der Fahrsituation insbesondere im Verkehrsgeschehen abgetastet wird, wodurch fahrsituationsbedingte Fahraktionen auslösende Eingriffsignale (ES) erzeugt werden, welche in entsprechende Ansteuersignale (AS) für den Antriebsstrang (10) umgesetzt werden, und
die fahrsituationsabhängigen Eingriffsignale (ES) zumindest zeitweise gespeichert werden.

11. Verfahren nach Anspruch 9 oder 10,
**dadurch gekennzeichnet, daß**
die fahrerseitigen Betätigungssignale (BS), die fahrsituationsabhängigen Eingriffsignale (ES), die Ansteuersignale (AS) für den Antriebsstrang (10), die Ist-Fahrzeugdaten (FD) und/oder die Positionsdaten (PD) an eine fahreugexterne Funktionseinheit (26) zur weiteren Datenverarbeitung übermittelt werden.

12. Verfahren nach einem der Ansprüche 9 bis 11,
**dadurch gekennzeichnet, daß**
die den Fahrerwunsch repräsentierenden Betätigungssignale (BS) zumindest vom Fahrer eingegebene Geschwindigkeitssignale (FGS)und Positions- und Fahrtrichtungssignale (FFS) umfassen und als erster Bewegungsvektor (v̅1) gespeichert werden.

13. Verfahren nach einem der Ansprüche 10 bis 12,
**dadurch gekennzeichnet, daß**
die fahrsituationsabhängigen Eingriffsignale (ES) zumindest der Fahrsituation angepaßte Geschwindigkeitssignale (AGS) und Positions- und Fahrtrichtungssignale (AFS) umfassen und als ein zweiter Bewegungsvektor (v̅2) speicherbar sind.

14. Verfahren nach einem der Ansprüche 10 bis 13,
**dadurch gekennzeichnet, daß**
die fahrsituationsabhängigen Eingriffsignale (ES) Positions- und Richtungssignale bzw. Navigationssignale umfassen.

15. Verfahren nach einem der Ansprüche 9 bis 14,
**dadurch gekennzeichnet, daß**
die Ansteuersignale (AS) zumindest aus den Betätigungssignalen (BS) umgesetzte Soll-Geschwindigkeitssignale (GS_soll) und Soll-Positions- und Fahrtrichtungssignale (FS_soll) umfassen und als Soll-Bewegungsvektor (v̅soll) gespeichert werden.

16. Verfahren nach einem der Ansprüche 9 bis 15,
**dadurch gekennzeichnet, daß**
die Ist-Fahrzeugdaten (FD) zumindest das Ist-Geschwindigkeitssignal (GS_ist) und das Ist-Positions- und Fahrtrichtungssignal (FS_ist) umfassen und als ein Ist-Bewegungsvektor (v̅ist) gespeichert werden.

17. Verfahren nach einem der Ansprüche 9 bis 16,
**dadurch gekennzeichnet, daß**
im Falle eines Unfalls die gespeicherten Daten ausgelesen werden.

18. Verfahren nach einem der Ansprüche 9 bis 17,
**dadurch gekennzeichnet, daß**
der erste Bewegungsvektor (v̅1), der zweite Bewegungsvektor (V2), der Soll-Bewegungsvektor (v̅soll) und/oder der Ist-Bewegungsvektor (v̅ist) an eine fahreugexterne Funktionseinheit (26) zur weiteren Datenverarbeitung übermittelt werden.

## Claims

1. Device for registering travel data of a motor vehicle with an electronically actuated drive train (10), comprising
- operator control elements (18) for the driver-end generation of activation signals (BS) for influencing the drive train (10), the activation signals (BS) representing a control operation which is performed by the driver of the motor vehicle,
- an actuation device (20) for the activation-signal-dependent generation of actuation signals (AS) for the drive train (10), the actuation signals (AS) representing conversion of the activation signals (BS) by the actuation device (20),
- a sensor device (12) for determining actual vehicle data (FD) which relates to the vehicle dynamics, the actual vehicle data (FD) representing travel dynamics for the motor vehicle which have actually been carried out by the drive train (10),
- a time-registering device (13) for generating time data (ZD) and a position-determining device (14) for determining position data (PD) of the motor vehicle, as well as
- a storage device (16) for at least temporarily storing the activation signals (BS), the actuation signals (AS), the actual vehicle data (FD) and the time and position data (ZD, PD),
- the registered data can be classified, as it were, specifically into three levels, a first level, the travel data on the signal path from the driver via the operator control elements (18) and as far as the actuation device (20), in a second level, from the actuation device (20) as far as the drive train (10) and in a third level, the actual travel data of the motor vehicle which is actually carried out, **characterized in that** the travel data for each of the three levels is stored as a respective movement vector which specifies at least the speed and travel direction of the motor vehicle.

2. Device according to Claim 1, **characterized in that** the storage device (16) is connected to a sensor-based assistant device (22) for generating intervention signals (ES) for electronically influencing the actuation device (20) of the drive train (10) and is designed to at least temporarily store the intervention signals (ES).

3. Device according to Claim 2, **characterized in that** the assistant device (22) interacts with a navigation device (24), and the intervention signals (ES) can be determined by means of position and/or direction presettings of the navigation device (24).

4. Device according to one of Claims 1 to 3, **characterized by** a vehicle-internal transmitter device (28) which is in contact with a vehicle-external receiver device (26) and has the purpose of transferring the actual vehicle data (FD), the time data (ZD), the position data (PD), the activation signals (BS), the actuation signals (AS) and/or the intervention signals (ES) .

5. Device according to one of Claims 1 to 4, **characterized in that** the activation signals (BS) which are generated by the operator control elements (18) comprise at least speed signals (FGS) and position and travel direction signals (FFS) which are input by the driver.

6. Device according to one of Claims 2 to 5, **characterized in that** the intervention signals (ES) which are generated by the assistant device (22) comprise at least speed signals (AGS) and position and travel direction signals (AFS) which are preset by the assistant device (22).

7. Device according to one of Claims 1 to 6, **characterized in that** the actuation signals (AS) comprise at least set point speed signals (GS_setp) and set point position and travel direction signals (FS_setp) which are generated by the control device.

8. Device according to one of Claims 1 to 7, **characterized in that** the actual vehicle data (FD) which is determined by the sensor device (12) comprises at least actual speed signals (GS_act) and actual position and travel direction signals (FS_act).

9. Method for registering travel data of a motor vehicle with an electronically actuated drive train, the driver of the motor vehicle presetting his drivers' request by means of corresponding operator control inputs, as a result of which corresponding activation signals (BS) are generated, the activation signals (BS) are converted into actuation signals (AS) for the drive train (10) as a function of the drivers' request, time data (ZD), actual vehicle data (FD) relating to the travel dynamics and position data (PD) representing the position of the vehicle being determined and the activation signals (BS), the actuation signals (AS), the actual vehicle data (FD), the time data (ZD) and/or the position data (PD) being at least temporarily stored, the registered data can be classified, as it were, specifically into three levels, a first level, the travel data on the signal path from the driver via the operator control elements (18) and as far as the actuation device (20), in a second level, from the actuation device (20) as far as the drive train (10) and in a third level, the actual travel data of the motor vehicle which is actually carried out, **characterized in that** the travel data for each of the three levels is stored as a respective movement vector which specifies at least the speed and travel direction of the motor vehicle.

10. Method according to Claim 9, **characterized in that** the surroundings of the motor vehicle are sensed in terms of the travel situation, in particular in the events on the road, as a result of which intervention signals (ES) which trigger travel actions due to the travel situation and which are converted into corresponding actuation signals (AS) for the drive train (10) are produced, and the travel-situation-dependent intervention signals (ES) are at least temporarily stored.

11. Method according to Claim 9 or 10, **characterized in that** the driver-end activation signals (BS), the travel-situation-dependent intervention signals (ES), the actuation signals (AS) for the drive train (10), the actual vehicle data (FD) and/or the position data (PD) are transferred to a vehicle-external function unit (26) for further data processing.

12. Method according to one of Claims 9 to 11, **characterized in that** activation signals (BS) representing the drivers' request comprise at least speed signals (FGS) and position and travel direction signals (FFS) which are input by the driver and are stored as first movement vector (V1).

13. Method according to one of Claims 10 to 12, **characterized in that** travel-situation-dependent intervention signals (ES) comprise at least speed signals (AGS) and position and travel direction signals (AFS) which are adapted to the travel situation and can be stored as a second movement vector (V2).

14. Method according to one of Claims 10 to 13, **characterized in that** the travel-situation-dependent intervention signals (ES) comprise position signals and direction signals or navigation signals.

15. Method according to one of Claims 9 to 14, **characterized in that** the actuation signals (AS) comprise at least set point speed signals (GS_setp) and set point position and travel direction signals (FS_setp) which are converted from the activation signals (BS), and are stored as set point movement vector (Vsetp).

16. Method according to one of Claims 9 to 15, **characterized in that** the actual vehicle data (FD) comprises at least the actual speed signal (Gs_act) and the actual position and travel direction signal (FS_act) and is stored as an actual movement vector (Vact).

17. Method according to one of Claims 9 to 16, **characterized in that** in the case of an accident the stored data are read out.

18. Method according to one of Claims 9 to 17, **characterized in that** the first movement vector (V1), the second movement vector (V2), the set point movement vector (Vsetp) and/or the actual movement vector (Vact) are transmitted to a vehicle-external function unit (26) for further data processing.

## Revendications

1. Dispositif pour acquérir les données de conduite d'un véhicule automobile muni d'une chaîne de transmission (10) à commande électronique comprenant
- des éléments de commande (18) pour la génération par le conducteur de signaux d'actionnement (BS) destinés à influencer la chaîne de transmission (10), les signaux d'actionnement (BS) représentant une manoeuvre effectuée par le conducteur du véhicule automobile,
- un dispositif de commande (20) pour générer, en fonction des signaux d'actionnement, des signaux de commande (AS) pour la chaîne de transmission (10), les signaux de commande (AS) représentant une conversion des signaux d'actionnement (BS) par le dispositif de commande (20),
- un dispositif de détection (12) pour déterminer les données réelles du véhicule (FD) qui concernent la dynamique de conduite, les données réelles du véhicule (FD) représentant une dynamique de conduite du véhicule automobile réellement effectuée par la chaîne de transmission (10),
- un dispositif d'acquisition du temps (13) pour générer des données temporelles (ZD) et un dispositif de détermination de la position (14) pour déterminer des données de position (PD) du véhicule automobile et
- un dispositif de mémorisation (16) pour mémoriser au moins temporairement les signaux d'activation (BS), les signaux de commande (AS), les données réelles du véhicule (FD) ainsi que les données temporelles (ZD) et de position (PD),
- les données de conduite acquises étant divisées quasiment en trois plans, à savoir dans un premier plan les données de conduite sur le trajet du signal du conducteur vers le dispositif de commande (20) en passant par les éléments de commande (18), dans un deuxième plan du dispositif de commande (20) vers la chaîne de transmission (10) et dans un troisième plan les données de conduite réellement réalisées du véhicule automobile, **caractérisé en ce que** les données de conduite pour chacun des trois plans sont enregistrées sous la forme d'un vecteur de déplacement correspondant qui indique au moins la vitesse et le sens de déplacement du véhicule automobile.

2. Dispositif selon la revendication 1, **caractérisé en ce que** le dispositif de mémorisation (16) est relié avec un dispositif d'assistance (22) à base de capteurs pour générer des signaux d'intervention (ES) en vue d'influencer électroniquement le dispositif de commande (20) de la chaîne de transmission (10) et pour lequel une mémorisation au moins temporaire des signaux d'intervention (ES) est réalisée.

3. Dispositif selon la revendication 2, **caractérisé en ce que** le dispositif d'assistance (22) interagit avec un dispositif de navigation (24) et les signaux d'intervention (ES) peuvent être déterminés par des indications de position et/ou de direction du dispositif de navigation (24).

4. Dispositif selon l'une des revendications 1 à 3, **caractérisé par** un dispositif d'émission (28) interne au véhicule en contact avec un dispositif de réception (26) externe au véhicule pour transmettre les données réelles du véhicule (FD), les données temporelles (ZD), les données de position (PD), les signaux d'activation (BS), les signaux de commande (AS) et/ou les signaux d'intervention (ES).

5. Dispositif selon l'une des revendications 1 à 4, **caractérisé en ce que** les signaux d'actionnement (BS) générés par les éléments de commande (18) comprennent au moins des signaux de vitesse (FGS) ainsi que des signaux de position et de sens de déplacement (FFS) entrés par le conducteur.

6. Dispositif selon l'une des revendications 2 à 5, **caractérisé en ce que** les signaux d'intervention (ES) générés par le dispositif d'assistance (22) comprennent au moins des signaux de vitesse (AGS) ainsi que des signaux de position et de sens de déplacement (AFS) prédéfinis par le dispositif d'assistance (22).

7. Dispositif selon l'une des revendications 1 à 6, **caractérisé en ce que** les signaux de commande (AS) comprennent au moins des signaux de vitesse de consigne (GS_soll) ainsi que des signaux de position et de sens de déplacement de consigne (FS_soll) générés par le dispositif de commande.

8. Dispositif selon l'une des revendications 1 à 7, **caractérisé en ce que** les données réelles du véhicule (FD) déterminées par le dispositif de détection (12) comprennent au moins des signaux de vitesse réelle (GS_ist) ainsi que des signaux de position et de sens de déplacement réels (FS_ist)

9. Procédé d'acquisition des données de conduite d'un véhicule automobile muni d'une chaîne de transmission à commande électronique comprenant, le conducteur du véhicule automobile indiquant son souhait de conducteur par des entrées de commande correspondantes, des signaux d'actionnement (BS) correspondants étant générés, les signaux d'actionnement (BS) étant convertis en fonction du souhait du conducteur en signaux de commande (AS) pour la chaîne de transmission (10), des données temporelles (ZD), des données réelles du véhicule (FD) concernant la dynamique de conduite et des données de position (PD) représentant la position du véhicule étant déterminées et les signaux d'actionnement (BS), les signaux de commande (AS), les données réelles du véhicule (FD), les données temporelles (ZD) et/ou les données de position (PD) étant mémorisées au moins temporairement, les données de conduite acquises étant divisées quasiment en trois plans, à savoir dans un premier plan les données de conduite sur le trajet du signal du conducteur vers le dispositif de commande (20) en passant par les éléments de commande (18), dans un deuxième plan du dispositif de commande (20) vers la chaîne de transmission (10) et dans un troisième plan les données de conduite réellement réalisées du véhicule automobile, **caractérisé en ce que** les données de conduite pour chacun des trois plans sont enregistrées sous la forme d'un vecteur de déplacement correspondant qui indique au moins la vitesse et le sens de déplacement du véhicule automobile.

10. Procédé selon la revendication 9, **caractérisé en ce que** l'environnement du véhicule automobile est balayé pour y relever la situation de conduite notamment dans la circulation, des signaux d'intervention (ES) déclenchant des actions de conduite en fonction de la situation de conduite étant générés, lesquels sont convertis en les signaux de commande (AS) correspondants pour la chaîne de transmission (10) et les signaux d'intervention (ES) dépendant de la situation de conduite étant mémorisés au moins temporairement.

11. Procédé selon la revendication 9 ou 10, **caractérisé en ce que** les signaux d'activation (BS) du conducteur, les signaux d'intervention (ES) dépendant de la situation de conduite, les signaux de commande (AS) pour la chaîne de transmission (10), les données réelles du véhicule (FD) et/ou les données de position (PD) sont transmis à une unité fonctionnelle (26) externe au véhicule en vue de leur traitement ultérieur.

12. Procédé selon l'une des revendications 9 à 11, **caractérisé en ce que** les signaux d'actionnement (BS) représentant le souhait du conducteur comprennent au moins des signaux de vitesse (FGS) ainsi que des signaux de position et de sens de déplacement (FFS) entrés par le conducteur et sont enregistrés sous la forme d'un premier vecteur de déplacement (V1).

13. Procédé selon l'une des revendications 10 à 12, **caractérisé en ce que** les signaux d'intervention (ES) dépendant de la situation de conduite comprennent au moins des signaux de vitesse (AGS) ainsi que des signaux de position et de sens de déplacement (AFS) adaptés à la situation de conduite et peuvent être enregistrés sous la forme d'un deuxième vecteur de déplacement (V2).

14. Procédé selon l'une des revendications 10 à 13, **caractérisé en ce que** les signaux d'intervention (ES) dépendant de la situation de conduite comprennent des signaux de position et de direction ou des signaux de navigation.

15. Procédé selon l'une des revendications 9 à 14, **caractérisé en ce que** les signaux de commande (AS) comprennent au moins des signaux de vitesse de consigne (GS_soll) ainsi que des signaux de position et de sens de déplacement de consigne (FS_soll) convertis à partir des signaux d'actionnement (BS) et sont enregistrés sous la forme d'un vecteur de déplacement de consigne (v_soll).

16. Procédé selon l'une des revendications 9 à 15, **caractérisé en ce que** les données réelles du véhicule (FD) comprennent au moins le signal de vitesse réel (GS_ist) ainsi que le signal de position et de sens de déplacement réel (FS_ist) et sont enregistrées sous la forme d'un vecteur de déplacement réel (v_ist).

17. Procédé selon l'une des revendications 9 à 16, **caractérisé en ce que** les données sont délivrées en cas d'accident.

18. Procédé selon l'une des revendications 9 à 17, **caractérisé en ce que** le premier vecteur de déplacement (v1), le deuxième vecteur de déplacement (v2), le vecteur de déplacement de consigne (v_soll) et/ou le vecteur de déplacement réel (v_ist) sont transmis à une unité fonctionnelle du véhicule (26) en vue du traitement ultérieur des données.
